# EUROPÄISCHE PATENTANMELDUNG

(11) **EP 0 548 890 A1**
(43) Veröffentlichungstag der Anmeldung: **30.06.1993**
(21) Anmeldenummer: 92121725.3
(22) Anmeldetag: 19.12.1992
(51) Int. Cl.: A01B 49/06, A01B 79/02, A01C 5/06

(54) **Direktsaatverfahren und Vorrichtung zur Durchführung dieses Verfahrens**

(30) Priorität: 21.12.1991 DE 4142667; 11.08.1992 DE 4226486
(71) Anmelder: Hendlmeier, Konrad, D-93107 Thalmassing (DE)
(72) Erfinder: Hendlmeier, Konrad, D-93107 Thalmassing (DE)
(74) Vertreter: Wasmeier, Alfons, Dipl.-Ing.

(57) **Zusammenfassung**

Bei einem Direktsäverfahren wird eine Stoppeln und Pflanzenrückstände sowie das Erdreich bis Sätiefe räumende und böschende, seitlich drückende Bewegung durchgeführt, damit die organischen Rückstände auf der Oberfläche aus der Säreihe geräumt werden. Für dieses Direktsäverfahren wird ein um eine horizontale Achse rotierendes Räum- und Rillenformwerkzeug (2) verwendet, auf dessen zylinderförmiger Oberfläche im Abstand der Särillen voneinander angeordnete versetzte Räum- und Rillenformelemente (4-6) angeordnet sind; das rotierende Werkzeug greift in Fahrtrichtung in den Boden ein und läuft mit wesentlich höherer Geschwindigkeit als die Fahrgeschwindigkeit um.

## Beschreibung

Die Erfindung bezieht sich auf ein Direktverfahren und eine Vorrichtung zur Durchführung dieses Verfahrens. Als Direktsaatverfahren werden die Minimum-tillage- und Zero-tillage-Verfahren verstanden.

Derartige Verfahren sind z.B. in der DE-PS 33 32 964 beschrieben. Demnach handelt es sich bei dem "Zero-tillage-Verfahren" um ein Saatverfahren, bei dem keine Bodenbearbeitung zwischen den Säreihen während des Ausbringens des Saatgutes erfolgt. Dieses bekannte Verfahren verwendet Säschare, die den Boden im Bereich zwischen den Säreihen nicht bearbeiten, sondern lediglich in den unbearbeiteten Boden einen schmalen Schlitz reißen, in welchem Saatgut (und ggfs. Dünger) abgelegt wird. Hierzu wird das Erdreich im Bereich des Schlitzes, in dem das Saatgut in einer feuchten Erdschicht abgelegt werden soll, aufgerissen. Eine Sämaschine zur Durchführung einer derartigen Methode weist z.B. nach DE-PS 32 16 376 einen Aufreißkörper mit einer Aufreißspitze auf, die einen schmalen Schlitz in den unbearbeiteten Boden reißt, auf dessen Oberfläche sich noch die Stoppeln des abgeernteten Getreides und andere, lose Pflanzenrückstände befinden. Damit tritt ein Umschichten des aufgerissenen Erdreiches auf, das bewirkt, daß Teile der organischen Bestandteile auf der Bodenoberfläche mit dem aufgerissenen Erdreich vermischt werden. In diesen schmalen, aufgerissenen Schlitz in Form einer durchgehenden Rille wird das Saatgut punktuell auf den feuchten Grund des Schlitzes abgelegt, während im Anschluß daran Düngemittel auf einer trennenden Erdschicht abgelegt wird, die durch das Zusammenfallen der Seitenwände des Säschlitzes gebildet wird.

Eine derartige Methode hat die Nachteile, daß
1. eine durchgehende Rille in den Boden gerissen und der Boden in diesem Bereich somit umgeschichtet wird und organische Bestandteile in den aufgerissenen Boden gelangen, die für den Keimvorgang schädlich sind.
2. ein relativ hoher Kraftaufwand zum Ziehen der Rille und eine relativ hohe Werkzeugabnutzung aufgrund des kontinuierlichen Hindurchziehens des Werkzeuges durch den Boden erforderlich ist,
3. für jede Särille eine gesonderte Tiefenführungsrollenanordnung erforderlich ist, usw.

Aufgabe der Erfindung ist es, diese Nachteile zu vermeiden, und zwar durch
a) einen minimalen Eingriff in den Boden,
b) eine minimale Antriebsleistung,
c) eine große Flächenleistung,
d) ein minimales Gewicht,
e) besonders einfache Methoden für die Schaffung der erforderlichen Ablage- bzw. Keimbedingungen, und
f) ein seitliches Wegdrücken der Pflanzenrückstände im Bereich der Saatgutablage bzw. der Särille.

Gemäß der Erfindung wird diese Aufgabe durch ein Verfahren mit den Merkmalen des Kennzeichens des Anspruches 1 sowie durch eine Vorrichtung nach den Merkmalen des Kennzeichens des Anspruches 5 gelöst. Weitere Ausgestaltungen der Erfindung sind Gegenstand der Unteransprüche.

Nach dem erfindungsgemäßen Verfahren werden organische Pflanzenrückstände und Erdreich im unmittelbaren Bereich der Säreihe gleichzeitig zur Seite gedrückt, so daß an der Ablagestelle für das Saatkorn die erforderlichen Ablage- und Keimbedingungen geschaffen werden und das Saatkorn den erforderlichen Bodenschluß erhält. Die Saatkörner werden gleichzeitig nachlaufend in die so vorbereitete Saatreihe abgelegt und angedrückt, so daß der erforderliche Bodenschluß sichergestellt ist.

In weiterer Ausgestaltung des erfindungsgemäßen Verfahrens wird der Boden vorlaufend streifenförmig in Fahrtrichtung nivelliert, da in der Regel der unbearbeitete Boden nicht ausreichend plan ist, um die Voraussetzungen für einwandfreie Ablage- und Keimbedingungen zu schaffen.

Ferner wird mit der Erfindung vorgeschlagen, das abgelegte Saatgut mit umliegendem Erdreich zu bedecken und gleichzeitig oder unmittelbar anschließend anzudrücken. Das Bedecken erfolgt dabei mit dem Erdreich, das im Vorlauf böschend zur Seite gedrückt worden ist, um das Beet für das Saatgut zu schaffen, indem ein Druck von oben auf die Böschung ausgeübt wird, wodurch Erdreich in die Vertiefung und auf das Saatkorn gedrückt wird, oder aber dadurch, daß seitlich Erdreich freigeschnitten und über die Vertiefung zum Bedecken des Saatgutes gelegt wird.

Das zur Durchführung des erfindungsgemäßen Verfahrens verwendete Werkzeug ist ein um eine horizontale Achse rotierendes Räum- und Rillenformwerkzeug, auf dessen Oberfläche Räum- und Rillenformelemente angeordnet sind, die in die Bodenoberfläche so einwirken, daß sie Bodenrillen bildend zur Seite und schräg nach unten drücken, ohne daß dabei das beeinflußte Erdreich umgeschichtet wird. Durch den von den Werkzeugelementen auf die oberste Bodenschicht ausgeübten Druck wird das Erdreich an den Eingriffstellen verdichtet, so daß die für das Keimen des Sägutes gewünschten Ablagebedingungen geschaffen werden und gleichzeitig die Bodenstruktur so wenig wie möglich beeinflußt wird. Dadurch, daß das rotierende Werkzeug mit einer Geschwindigkeit umläuft, die um ein Vielfaches höher ist als die Fahrgeschwindigkeit, ergibt sich im wesentlichen eine kontinuierliche Rille für die Ablage des Saatgutes, wenn die Werkzeugelemente in einer radialen Ebene in Umfangsrichtung voneinander versetzt angeordnet sind. Um den Druckvorgang auf die Bodenoberfläche einwandfrei ausführen zu können und gleichzeitig die auf der Bodenoberfläche aufliegenden Pflanzenrückstände nach links und rechts zu verschieben und damit aus der zu bildenden Särille herauszuführen, sind die Werkzeugelemente beispielsweise als in radialer Richtung verlaufende dreieckförmige Elemente ausgebildet, deren vorlaufende Räumkante einen kleineren Winkel zur Werkzeugoberfläche aufweist als die ablaufende Kante. Bei einer bevorzugten Ausführungsform der Erfindung verläuft die auflaufende Seite des Dreiecks etwa tangential, während die ablaufende Kante senkrecht auf der Oberfläche steht und die dritte Seite des Elementes mit der Werkzeugoberfläche verbunden ist. Diese spezielle Ausführung beschränkt jedoch die Erfindung in keiner Weise.

Bei einer speziellen Ausführungsform der Erfindung sind die Werkzeugelemente auf dem Trommelumfang in beabstandeten Reihen in Umfangsrichtung hintereinander angeordnet. Jeweils zwei benachbarte Elemente zweier benachbarter Reihen bilden eine Einheit und arbeiten zusammen; sie können parallel und axial nebeneinander oder parallel und axial versetzt zueinander angeordnet sein und in Umfangsrichtung entgegen der Drehrichtung im spitzen Winkel aufeinander zu laufend bzw. V-förmig sowie gleichzeitig in radialer Richtung nach außen in spitzem Winkel aufeinander zu laufend bzw. V-förmig geneigt angeordnet sein. Die einzelnen Elemente sind in gleicher Richtung orientiert und vorzugsweise etwa dreieck- oder trapezförmig über den Walzenumfang vorstehend ausgebildet und weisen eine steilere auflaufende Stirnkante und eine flachere ablaufende Kante auf. Vorzugsweise verläuft die auflaufende Kante etwa radial, die ablaufende Kante etwa tangential zur Walzenoberfläche. Aufgrund der schrägen Fläche wird ein Druck auf die Bodenoberfläche ausgeübt und damit eine einseitig V-förmige Särille erzeugt. Entsprechend können abwechselnd aufeinanderfolgende Werkzeugelemente in entgegengesetzter Richtung geneigt angeordnet sein, so daß eine eindeutigere V-Form der Särille erzielt wird. Die etwa dreieck- oder trapezförmig ausgebildeten Werkzeugelemente können in der radialen Ebene des Werkzeuges gekrümmt ausgebildet sein, wodurch die Formgebung der Rille beeinflußt wird. Der Einstell- bzw. Schnittwinkel der Werkzeugelemente wird dabei größer als 90^{o} gewählt.

Die einzelnen Werkzeugelemente können unmittelbar mit der Mantelfläche der Walze starr oder auswechselbar befestigt sein; sie werden aber aus Gründen der einfacheren und zweckmäßigeren Auswechselbarkeit insbesondere auf fest mit der Walzenoberfläche verbundenen, z.B. verschweißten Trägern lösbar verbunden, z.B. verschraubt, damit bei Abnutzung der Elemente ein einfaches, schnelles Auswechseln einzelner oder aller Elemente sichergestellt ist. Die Befestigung kann vorteilhafterweise so gewählt werden, daß nur eine Schraube pro Element verwendet wird und das Element zusätzlich eine kraft- und/oder formschlüssige Auflage auf dem Träger erhält. Anstelle einer Schraubbefestigung kann auch eine Schnapp-oder Rastverbindung vorgesehen werden. Des weiteren kann anstelle einer Vielzahl von Einzelträgern, die auf der Walzenoberfläche befestigt, z.B. verschweißt sind, eine Scheibenanordnung vorgesehen sein, die aus in Achsrichtung zueinander versetzten einzelnen Scheiben besteht, an denen die einzelnen Werkzeugelemente lösbar befestigt werden.

Das rotierende Werkzeug ist so angetrieben, daß der dem Erdreich zugewandte Abschnitt in Fahrtrichtung gegen den Boden drückt; da die Rotation mit einem Vielfachen der Fahrgeschwindigkeit erfolgt, streichen die Werkzeugelemente räumend und drückend auf dem Boden entlang zur Bildung der Särille. Das Werkzeug kann dabei bodenangetrieben oder fremdangetrieben ausgebildet sein. Es ist mit dem Rahmengestell höhenverstellbar verbunden, so daß die Höhe des Eingriffes der Werkzeugelemente in die oberste Bodenschicht veränderbar ist und damit die Sätiefe variiert werden kann. Das Werkzeug selbst ist als Zylinder bzw. Trommel ausgebildet, auf dem bze. der in horizontaler Achsrichtung nebeneinander mehrere Umfangsreihen von Werkzeugelementen angeordnet sind, so daß mit dem Werkzeug mehrere parallele Särillen auf einmal gezogen werden können. Beispielsweise beträgt die Breite des Werkzeuges etwa 1 m; die Gesamtmaschine kann jedoch wesentlich breiter ausgeführt sein, wenn das Werkzeug jeweils im Abstand von ca. 1 m abgestützt ist.

Dem Räum- und Rillenformwerkzeug folgt unmittelbar in Ausrichtung mit der Umfangsreihe von Werkzeugelementen ein Saatrohr mit Säschar zum Ablegen des Saatgutes auf dem vorbereiteten Saathorizont. Ein derartiges Särohr mit Säschar ist ebenfalls vorzugsweise höhenverstellbar auf dem Rahmengestell befestigt und an sich bekannt. Die durch das Särohr auf den Saathorizont abgelegten Saatkörner werden nach einer Ausführungsform der Erfindung durch eine nachlaufende Bedeckvorrichtung bedeckt und es wird anschließend durch eine Stütz- und Andrückwalze das die Bedeckung bildende Erdreich angedrückt, so daß ein einwandfreier Bodenschluß und eine einwandfreie Bedeckung des Saatgutes erreicht wird. Sowohl die Bedeckvorrichtung als auch die Stütz- und Andrückwalze sind vorzugsweise höhenverstellbar an dem Gestellrahmen befestigt. Die Saatgutablage kann beispielsweise auch mittels "Rollschar" erfolgen.

Die Särohre sind in der Regel vertikal angeordnet; der Auslauf der Särohre, die mit vorliegender Erfindung verwendet werden, ist vorzugsweise im Winkel nach hinten unten in bezug auf die Fahrtrichtung ausgebildet. Zwischen den Särohren sind vorzugsweise Abstreif- und/oder Stützräder angeordnet, die den Schaft des Särohres freihalten und die boden- oder fremdangetrieben ausgebildet sowie in Fahrtrichtung verschiebbar angeordnet sein können. Alternativ können zwischen den Särohren Druckwalzen oder Druckräder angeordnet sein, deren Breite etwas kleiner ist als der Abstand zweier Rohre. Bei Verwendung umlaufender Niederhalter wird kein Druck auf die Niederhalter ausgeübt, werden Stützräder verwendet, stehen diese unter Druck.

Der Räum- und Rillenvorrichtung ist in weiterer Ausgestaltung der Erfindung eine vorzugsweise höhenverstellbar angeordnete Stütz- und Nivelliervorrichtung vorgeschaltet, deren Aufgabe im wesentlichen darin besteht, die Bodenoberfläche unmittelbar vor der Räum- und Rillenformvorrichtung auf einheitliches Niveau zu walzen, die aber auch die Arbeitstiefenführung übernehmen kann. Diese Stütz- und Nivelliervorrichtung kann beispielsweise eine Walze, eine Schiene, ein Stützrad oder dergl. sein, wobei die jeweilige Vorrichtung zweckmäßigerweise auswechselbar befestigt ist. Die Anordnung kann auch so gewählt sein, daß eine Stützwalze und eine Nivellierschiene miteinander gekoppelt sind. Dem Räum- und Rillenformwerkzeug kann aber auch eine den Boden einebnende Kreiselegge, Rotoregge oder Rüttelegge voreilend zugeordnet sein.

Die Bedeckvorrichtung nach der Erfindung ist vorzugsweise in Form jeweils einer Scheibe oder einer tellerförmigen Bürste ausgebildet, die der jeweiligen Saatgutrille zugeordnet ist. Um das auf dem Sähorizont abgelegte Sägut einwandfrei bedecken zu können, kann die Bedeckvorrichtung bzw. Bedeckscheibe schwenk- und neigbar angeordnet sein, so daß damit seitlich Erdreich gelockert und über das Saatgut gelegt wird. Die Bedeckvorrichtung ist entweder durch Fremdantrieb voreilig oder durch Bodenantrieb voreilig angetrieben, d.h., daß sie mit einer höheren Drehgeschwindigkeit umläuft als der Fahrgeschwindigkeit entspricht. Die Bedeckvorrichtung kann in einer anderen Ausführungsform der Erfindung unmittelbar neben dem Särohr angeordnet sein, so daß die Bedeckvorrichtung das von ihr gelöste Erdreich unmittelbar im Anschluß an den Austritt des Sägutes aus dem Särohr bedeckt. Zweckmäßigerweise ist die Bedeckvorrichtung eine gewölbte Scheibe, die in die Erdreichoberfläche einwirkt und das Erdreich auf das Sägut umlegt.

Dem erfindungsgemäßen Werkzeug kann nach der Erfindung auch ein horizontales Flügelschar vorgeschaltet sein, das insbes. bei extrem stark verdichteten Böden zur Bodenlockerung tiefer als Saatguthorizont in den Boden einwirkt und den Boden für die Bearbeitung und Vorbereitung durch das erfindungsgemäße Werkzeug vorbereitet. Derartige Flügelschare sind bei normaler Bodenbeschaffenheit nicht erforderlich.

Die erfindungsgemäße Sävorrichtung kann in Kombination mit Erntegeräten, z.B. Mähdreschern, Pressen und dergleichen oder in Kombination mit Bodenbearbeitungsgeräten eingesetzt werden; sie kann auch zum Ausbringen von rieselfähigen, korn- bzw. pulverförmigen Düngermaterialien eingesetzt werden.

Nachstehend wird die Erfindung in Verbindung mit der Zeichnung anhand von Ausführungsbeispielen erläutert. Es zeigt:
- Fig. 1: eine Seitenansicht einer Grundausführungsform der Erfindung,
- Fig. 2: eine Seitenansicht einer weiteren Ausführungsform der Erfindung,
- Fig. 3: eine Seitenansicht einer anderen Ausführungsform der Erfindung,
- Fig. 4: eine Seitenansicht einer weiteren Ausführungsform der Erfindung,
- Fig. 5: eine Seitenansicht einer abgeänderten Ausführungsform der Anordnung nach Fig. 4,
- Fig. 6: eine Darstellung eines Werkzeugelementes am Werkzeug in einer Ansicht von hinten,
- Fig. 7: eine Darstellung des Werkzeugelementes nach Fig. 6 in einer Ansicht von oben,
- Fig. 8: eine Seitenansicht einer weiteren Ausführungsform der Erfindung,
- Fig. 9: eine Aufsicht auf eine Ausführungsform des Werkzeugs und der Werkzeugelemente,
- Fig. 10: eine Seitenansicht einer anderen Ausführungsform des Werkzeugs und der Werkzeugelemente,
- Fig. 11: eine vergrößerte Darstellung einer speziellen Ausführung eines Werkzeugelementes, in Seitenansicht, und
- Fig. 12: das Werkzeugelement nach Fig. 11 in Vorderansicht.

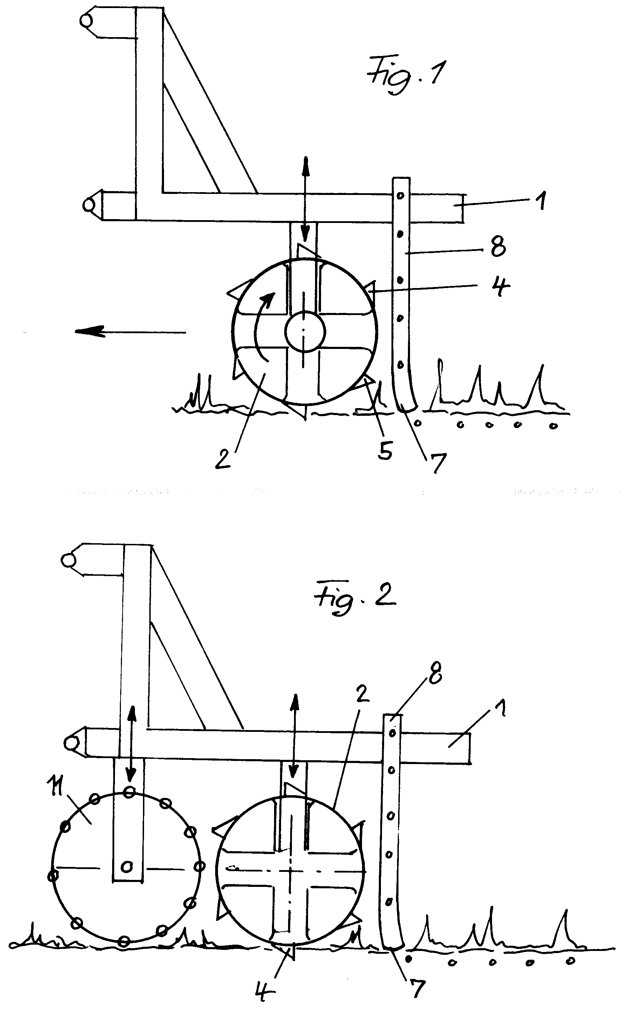

Ein Rahmengestell 1, das z.B. über eine angedeutete Dreipunktaufhängung an der Rückseite eines Schlepperfahrzeuges befestigt ist, nimmt die rotierende Räum-und Rillenformvorrichtung 2 über eine höhenverstellbare Tragschiene 3 auf. Die Oberfläche der zylinderförmigen bzw. trommelförmigen Vorrichtung 2 weist jeweils in einer vertikalen Ebene in Umfangsrichtung versetzt angeordnete Räum- und Rillenformelemente 4, 5, 6 auf, die in die oberste Bodenschicht räumend und drückend eingreifen, so daß die Elemente 4, 5, 6 eine Saatrille in dem überfahrenen Boden ausbilden. Die Elemente 4, 5, 6 haben eine etwa tangential zur Werkzeugoberfläche angeordnete auflaufende Seite sowie eine etwa vertikal zu dieser Oberfläche verlaufende ablaufende Kante. Diese Elemente sind in den Figuren 6 und 7 näher dargestellt. Aufgrund des Abstandes der Elemente 4, 5, 6 voneinander in Umfangsrichtung treffen diese Elemente bei rotierendem Werkzeug 2 nacheinander auf die oberste Bodenschicht auf; dadurch, daß das in Pfeilrichtung 7 rotierende Werkzeug 2 jedoch mit einer erheblich größeren Rotationsgeschwindigkeit umläuft als der Fahrgeschwindigkeit in Fahrtrichtung entspricht, bilden die Elemente 4, 5, 6 auf der Bodenfläche eine Särille aus, indem aufgrund der Formgebung der Elemente die oberste Bodenschicht an dieser Rille seitlich und nach unten verdrängt bzw. geräumt und gedrückt wird, so daß durch diese Druckwirkung eine rillenförmige Vertiefung ausgebildet wird, deren Basis die Ablagestelle für das Sägut darstellt. Unmittelbar hinter dem Werkzeug 2 ist ein höhenverstellbar mit dem Rahmengestell 1 verbundenes Särohr 8 angeordnet, das am unteren Ende an der Eingriffstelle mit der Bodenoberseite und an der Saatgutaustrittsstelle ein Säschar 9 besitzt. Das Sägut 10 wird in den gedrückten bzw. geräumten Sähorizont eingebracht und findet aufgrund der Druckwirkung, die von den Elementen 4, 5, 6 auf den Boden ausgeübt wird, einwandfreie Ablage- und Keimbedingungen. Entscheidend für diese günstigen Bedingungen ist, daß die Elemente 4, 5, 6 aufgrund ihrer Anordnung und Ausgestaltung die in geradliniger Verlängerung der zu räumenden Saatrille befindlichen Pflanzenrückstände von unten her erfassen und zur Seite legen, so daß mit Sicherheit vermieden wird, daß noch Pflanzenrückstände in der Saatrille verbleiben, die einen Keimvorgang erheblich behindern bzw. völlig unterbinden würden. Diese Pflanzenrückstände werden durch die räumende Wirkung der Werkzeugelemente 4, 5, 6 von der auflaufenden Seite dieser Elemente zunächst unterfahren, angehoben und dann zur Seite gelegt.

Diese grundsätzliche Ausführungsform der Erfindung nach Fig. 1 ist in Fig. 2 dadurch erweitert, daß der Räum- und Rillenformvorrichtung 2 eine Stütz- und Nivellierwalze 11 vorgeschaltet ist, die das vor der Vorrichtung 2 liegende Erdreich vorwalzt und damit die räumende Wirkung der Werkzeugelemente 4, 5, 6 verbessert bzw. deren Effektivität erhöht. Die Stütz- und Nivellierwalze 11 ist über einen vertikalen Träger 12 höhenverstellbar mit dem Gestellrahmen 1 befestigt, so daß die Niveauhöhe dieser Walze bestimmt werden kann. Die Walze 11 hat gleichzeitig eine stützende Wirkung der gesamten Sävorrichtung. Derartige Stützräder bzw. Stützwalzen sind in bestimmten Abständen voneinander über die gesamte Maschinenbreite vorgesehen, wobei die einzelnen Walzen bzw. Räder zueinander höhenbeweglich befestigt sein können. Die Arbeitsbreite derartiger Stützwalzen bzw. entsprechender Stützräder beträgt z.B. maximal 1 m, während die Gesamtarbeitsbreite 3 m oder mehr betragen kann.

Bei der Ausführungsform der Sävorrichtung nach Fig. 3 ist der Räum- und Rillenformvorrichtung 2 und der Sävorrichtung 8, 9 eine Bedeckvorrichtung 13 zugeordnet, die über einen vertikalen Träger 14 höhenverstellbar bei 15 am Gestellrahmen 1 befestigt ist. Diese Bedeckvorrichtung ist z.B. als Bedeckscheibe ausgebildet, vorzugsweise als Scheibe, die in geringem Abstand seitlich von der Särille in den Boden eingreift, Erdreich auf die Saatrille fördert und die darin abgelegten Saatkörner mit Erdreich bedeckt. Der Bedeckvorrichtung 13 nachlaufend ist eine Stütz- und Andrückwalze 16 vorgesehen, die das die Saatkörner bedeckende Erdreich andrückt und damit einen einwandfreien Bodenschluß der Saat bewirkt. Diese Andrückwalze 16 hat gleichzeitig die Funktion einer Stützwalze für die gesamte Sävorrichtung. Der Abstand dieser Stütz- und Andrückwalze 16 von der vorauslaufenden Bedeckscheibe 15 ist vorzugsweise kleiner als die Summe der Radien dieser beiden Vorrichtungen.

Bei der Sävorrichtung nach Fig. 4 ist die Vorrichtung nach Fig. 3 um eine vorauslaufende Stütz- und Nivelliervorrichtung 11 ergänzt, wie sie in der Ausführungsform nach Fig. 2 bereits dargestellt ist, so daß diese Sävorrichtung an beiden Enden abgestützt ist und gleichzeitig der Boden vor dem Räum- und Rillenformwerkzeug 2 nivelliert und das bedeckte Saatgut angedrückt wird.

Bei der Ausführungsform nach Fig. 5 ist im Vergleich zu der Ausführungsform nach Fig. 4 die Stütz- und Nivelliervorrichtung nicht als Walze, sondern als höhenverstellbare Stütz-und Nivellierschiene 17 ausgebildet, die den vor dem Werkzeug 2 liegenden Boden ebnet und die Effektivität der Räum- und Rillenformwerkzeuge verbessert.

Eine Ausführungsform der Räum- und Rillenformvorrichtungen 2 ist in den Figuren 6 und 7 näher dargestellt. Die Werkzeugelemente 4 sind hierbei in Umfangsrichtung hintereinander, also in der Zeichenebene nach Fig. 1 aus der Ebene des Rades 2 bzw. einer Walze 2 schräg nach außen geneigt angeordnet, so daß sie räumend und drückend im Boden eine Särille bilden. Die Särille wird symmetrisch zur Fahrtrichtung ausgebildet, wenn jeweils zwei entsprechende Werkzeugelemente auf der Räum- und Rillenformvorrichtung 2 miteinander zusammenwirkend angeordnet sind, wie in Fig. 6 mit 2'', 4'' dargestellt. Anstelle einzelner Vorrichtungen 2 kann die Vorrichtung 2 als durchgehende Walze ausgebildet sein, auf der eine Vielzahl von Werkzeugelementen 4 bzw. 4 und 4' in axialer Richtung nebeneinander angeordnet sein.

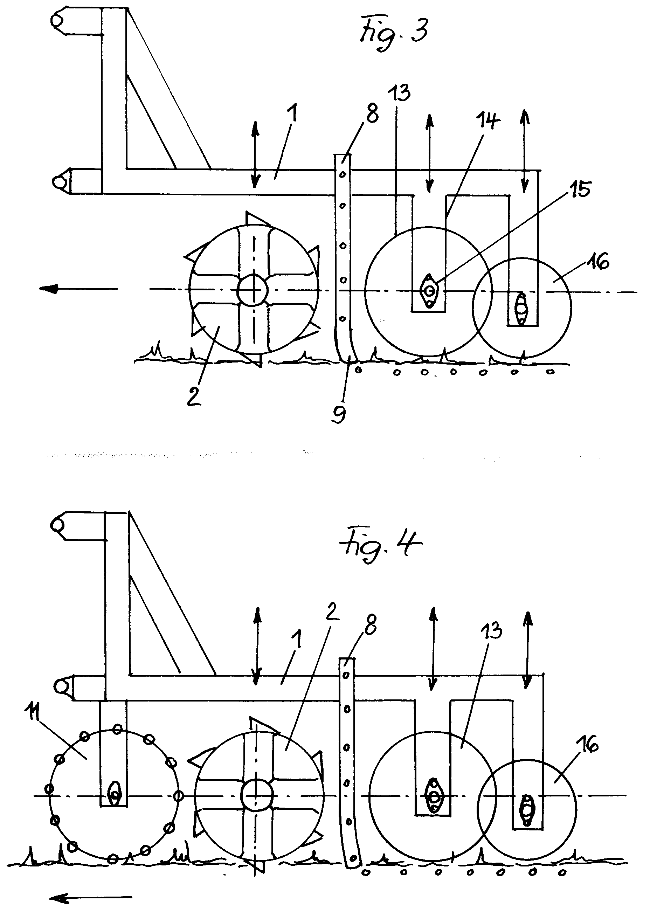

Bei der Ausführungsform nach Fig. 8 ist ein vertikal am Rahmen 1 befestigtes Särohr 18 dargestellt, das am Auslauf 19 entgegen der Fahrtrichtung nach unten geneigt ausgebildet ist; der Neigungswinkel beträgt hierbei in der Größenordnung von 30^{o}; durch diese Neigung wird erreicht, daß das Saatgut in der durch die Vorrichtung 2, 4 geschaffenen Särille sicherer abgelegt wird und nicht verspringt. Zwischen den Särohren 18 sind Abstreif- und Stützräder 20 angeordnet, die entweder bodenangetrieben oder fremdangetrieben sind, und deren Abstand zur Vorrichtung 2, also in Fahrtrichtung, verstellbar ist. In ihrer Abstreiffunktion haben diese Räder 20 die Wirkung, daß sich an den Särohren ansammelndes Material, insbesondere Pflanzenrückstände, gezielt abgestreift wird und damit für das Saatgut, das in die Särille eingelegt wird, unwirksam gemacht wird. Ein solches Abstreifrad kann auch so ausgebildet sein, daß es nicht unmittelbar zwischen die Särohre eingreift, sondern auf seinem Umfang radial nach außen vorstehende Fingerelemente 20 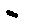 besitzt, die das Abstreifen übernehmen. Soweit die Räder 20 auch eine Stützfunktion übernehmen sollen, üben diese Räder einen Druck auf den Boden aus.

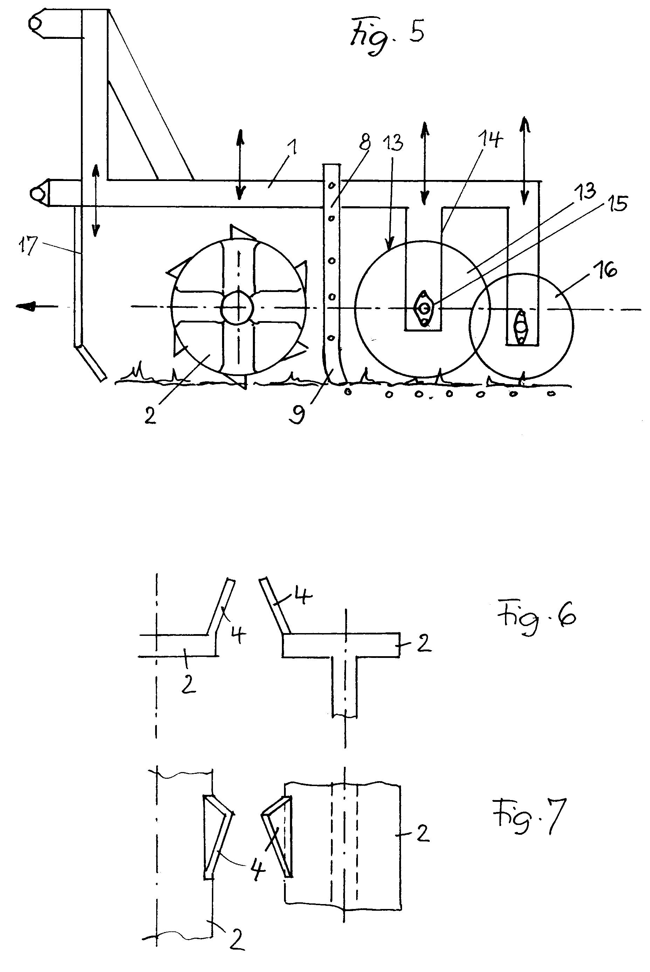

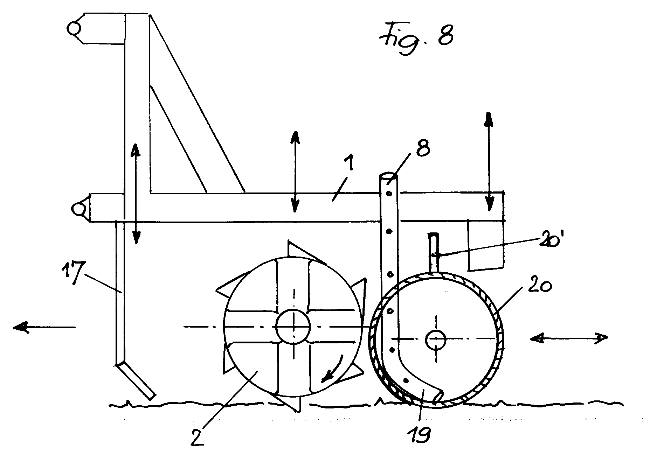

Bei der Ausführungsform nach Fig. 9 und 10 ist die Räum- und Rillenformvorrichtung 2 als zylindrische Trommel 21 ausgebildet, auf deren Umfang in axialer Richtung nebeneinander und in Umfangsrichtung hintereinander angeordnete Werkzeugelemente 22, 23, 24, 25 dargestellt sind, die jeweils Umfangsreihen von Werkzeugelementen bilden, und die jeweils paarweise, nämlich 22 - 23 und 24 - 25 miteinander, zur Ausbildung der Särille zusammenwirken. Die einzelnen Werkzeugelemente 22 -25 sind dabei sowohl in der radialen Ebene als auch in Laufrichtung paarweise aufeinander zu geneigt angeordnet, so daß sie zur Ausbildung einer V-förmigen Särille zusammenwirken. In Fig. 10 ist in seitlicher Ansicht eine ähnliche Ausführungsform dargestellt, in der auf dem Zylinder 21 Träger 26 starr befestigt, z.B. verschweißt sind, die die Werkzeugelemente 27 aufnehmen, welche in Fig. 10 in der radialen Ebene leicht gewölbt sind. Die Werkzeugelemente 27 sind bei 28 mit dem jeweiligen Träger 26 verschraubt, wobei eine einzige Schraubverbindung mit zusätzlichem Anschlag des Werkzeugelementes 27 am Träger 26 eine einwandfreie Positionierung und eine besonders einfache Ausführung ergibt.

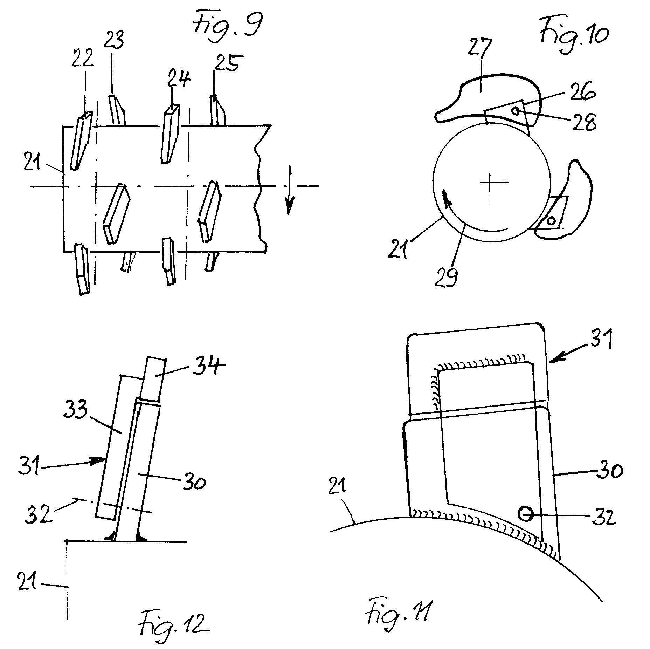

Eine spezielle Ausführungsform eines Werkzeugelementes mit Werkzeugträger ist in Fig. 11 dargestellt. Auf der Oberfläche der Trommel 21 ist der Werkzeugträger 30 starr befestigt, der ein Werkzeugelement 31 aufnimmt, das bei 32 mit dem Träger 30 verschraubt ist. Das Werkzeugelement 31 ist so ausgeführt, daß es einen Hauptteil 33 und einen Ansatz 34 aufweist, wobei die Unterseite des Ansatzes 34 in Anlage mit der Oberseite des Trägers 30 kommt und damit eine formschlüssige Verbindung zusammen mit der Schraubverbindung 32 hergestellt wird.

## Patentansprüche

1. Säverfahren mit unmittelbar vorausgehender ebenerdiger Saatbettbereitung, mit Rillenformung zum Einbringen des Saatgutes in das Erdreich und mit Keimschluß zwischen Saatgut und vorbereiteter Bodenstelle, wobei der Boden ungepflügt bleibt, die Stoppeln und Pflanzenrückstände liegen gelassen werden und bei der Saatbeetbereitung Erdreich nicht abgetragen oder umgeschichtet, sondern lediglich verschoben wird,
**dadurch gekennzeichnet,** daß auf dem so vorbereiteten Boden eine die Stoppeln und Pflanzenrückstände sowie das Erdreich bis Sätiefe räumende und böschende, seitlich drückende Bewegung durchgeführt wird, mit der die organischen Rückstände auf der Oberfläche aus der Säreihe geräumt und die für das Keimen erforderlichen Ablegebedingungen geschaffen werden.

2. Säverfahren nach Anspruch 1, dadurch gekennzeichnet, daß vorlaufend der Boden streifenweise über die gesamte Arbeitsbreite nivelliert und dabei zumindest stellenweise seitlich verschoben wird, derart, daß ein möglichst ebenes Saatbeet geschaffen wird.

3. Sävorrichtung für das Direktsäverfahren, mit einem Rahmengestell, einem am Rahmengestell befestigten Werkzeug zum Formen der Särille, und einer Vorrichtung zum Einbringen des Sägutes in die Särille, dadurch gekennzeichnet, daß das Werkzeug (2) ein um eine horizontale Achse rotierendes Räum- und Rillenformwerkzeug (2 - 6) ist, auf dessen zylinderförmiger Oberfläche im Abstand der Särillen voneinander angeordnete, in Umfangsrichtung voneinander versetzte Räum- und Rillenformelemente (4 - 6) angeordnet sind, und daß die Drehrichtung des rotierenden Werkzeuges (2) so gewählt ist, daß die Werkzeugelemente (4 - 6) an der Bodeneingriffsstelle in Fahrtrichtung und mit einer wesentlich höheren Geschwindigkeit als die Fahrgeschwindigkeit in den Boden einwirken.

4. Sävorrichtung nach Anspruch 3, dadurch gekennzeichnet, daß die Werkzeugelemente (4 - 6) in radialer Richtung von der zylindrischen Oberfläche des Werkzeugs (2) nach außen vorstehende, in der radialen Ebene angeordnete, im wesentlichen dreieckförmige Ansätze bzw. Lappen sind, die in den obersten Bodenbereich eindringend und Särillen bildend zur Seite und schräg nach unten drücken und gleichzeitig die auf dem Boden liegenden Pflanzenrückstände unterfahren und sie bei der kombinierten Vorwärts- und Aufwärtsbewegung zur Seite bewegen.

5. Sävorrichtung nach Anspruch 3 oder 4, dadurch gekennzeichnet, daß dem Werkzeug (2) und der Sävorrichtung (8, 9) eine Bedeckvorrichtung (13) und wahlweise eine Stütz- und Andrückwalze (16) nachgeschaltet ist, die auf dem Rahmengestell (1) einstellbar befestigt ist, daß wahlweise zusätzlich dem Werkzeug (2) eine Stütz- und Nivellierwalze (11) bzw. Nivellilerschiene (17) vorgeschaltet ist, die auf dem Rahmengestell (1) einstellbar befestigt ist, und daß wahlweise zusätzlich vor dem Werkzeug (2) eine den Boden einebnende Egge, z.B. eine Kreisel-, Rotor- oder Rüttelegge, auswechselbar angeordnet ist.

6. Sävorrichtung nach Anspruch 5, dadurch gekennzeichnet, daß die Bedeckvorrichtung (13) als Scheibe ausgebildet ist, vorzugsweise in Fahrtrichtung schräg zur vertikalen Ebene angeordnet ist, und wahlweise fest oder schwenk- und/oder neigbar befestigt ist.

7. Sävorrichtung nach einem der Ansprüche 3 - 6, dadurch gekennzeichnet, daß zusätzlich vor dem Werkzeug (2) horizontale Flügelschare angeordnet sind, die tiefer als Sätiefe in den Boden einwirken und die eine vorauseilende Bodenlockerung bewirken.

8. Sävorrichtung nach einem der Ansprüche 3 - 7, dadurch gekennzeichnet, daß die Gesamtarbeitsbreite der Maschine in einzelne Felder unterteilt ist, und daß die seitliche Begrenzung der jeweiligen Felder durch Stützräder, Stützwalzen oder dergl. gebildet ist.

9. Sävorrichtung nach einem der Ansprüche 4- 8, dadurch gekennzeichnet, daß die Werkzeugelemente (4 - 6) in axialer Richtung nebeneinander in etwa gleichem Abstand und auf Lücke, sowie in Umfangsrichtung hintereinander in etwa gleichem Abstand und auf Lücke gegeneinander versetzt angeordnet sind, und wahlweise auswechselbar bzw. an auf der zylindrischen Werkzeugoberfläche starr befestigten, z.B. angeschweißten Werkzeugelementträgern auswechselbar befestigt sind.

10. Sävorrichtung nach Anspruch 4 oder einem der folgenden, dadurch gekennzeichnet, daß der Saatrohrauslauf nach hinten unten in bezug auf die Fahrtrichtung geneigt angeordnet ist, und wahlweise zwischen den Saatrohren jeweils ein Abstreif- und Stützrad in Fahrtrichtung verschiebbar angeordnet ist, das bodenangetrieben oder fremdangetrieben sein kann.
